**Europäisches Patentamt**

**European Patent Office**

**Office européen des brevets**

(11) Veröffentlichungsnummer: **0 197 298**
**A2**

## (12) EUROPÄISCHE PATENTANMELDUNG

(21) Anmeldenummer: **86102835.5**

(22) Anmeldetag: **04.03.86**

(51) Int. Cl.⁴: **B29D 30/00**

(30) Priorität: **05.03.85 DE 3507713**

(43) Veröffentlichungstag der Anmeldung:
**15.10.86 Patentblatt 86/42**

(84) Benannte Vertragsstaaten:
**AT BE CH DE FR GB IT LI LU NL SE**

(71) Anmelder: **Continental Gummi-Werke Aktiengesellschaft**
**Königsworther Platz 1**
**D-3000 Hannover 1(DE)**

(72) Erfinder: **Fonseca, Manuel**
**Parkstrasse 21**
**D-3050 Wunstorf 1, Luhte(DE)**
Erfinder: **Rohde, Dieter**
**Windmühlenstrasse 4**
**D-3160 Lehrte(DE)**

(54) **Verfahren zur Herstellung eines Fahrzeugluftreifens.**

(57) Die Erfindung bezieht sich auf ein Verfahren zur Herstellung eines Fahrzeugluftreifens, der mit seinen Wülsten am radial inneren Umfang einer Felge montierbar ist und bei dem die Wülste relativ zu den Wulstkernen verschwenkbar sind. Um den Reifen konturgerecht vulkanisieren zu können, wird vorgeschlagen, daß zunächst die Karkasse mit den benachbarten Kautschukschichten und die Reifenwülste mit zug-und druckfesten Wulstkernen auf einer Wickeltrommel zu einem im wesentlichen zylinderförmigen Rohling zusammengefügt werden, bei dem die Reifenwülste sich gegenüber dem mittleren Bereich des Rohlings nach radial innen erstrecken und die axial inneren Begrenzungsflächen der Reifenwülste mit der Zylinderwand des Rohlings im wesentlichen rechte Winkel einschließen, daß danach der Rohling zumindest im Bereich der Reifenwülste vorvulkanisiert wird, daß dann die Reifenwülste um etwa 180° um die Wulstkerne geschwenkt werden und der Rohling nach dem Einnehmen der Toroidform mit dem Laufstreifen und gegebenenfalls den Seitenwandstreifen versehen und im wesentlichen in der Betriebsstellung der Wülste fertigvulkanisiert wird.

EP 0 197 298 A2

Rank Xerox

FIG. 2

## Verfahren zur Herstellung eines Fahrzeugluftreifens

Die Erfindungbetrifft ein Verfahren zur Herstellung eiens Fahrzeugluftreifens, der mit seinen Wülsten am radial inneren Umfang einer Felge montierbar ist und bei dem Wülste relativ zu den Wulstkernen verschwenkbar sind.

Es sind mit einem solchen Fahrzeugluftreifen versehene Fahrzeugräder bekannt, die sich für einen sogenannten Notlauf besonders gut eignen und bei denen der Fahrzeugluftreifen in fast allen Fahreigenschaften den herkömmlichen Reifen überlegen ist. Ein derartiges Fahrzeugrad wird z. B. in der DE-OS 30 00 428 beschrieben. Bei diesem Fahrzeugrad befinden sich die Dichtflächen des Reifens, d. h. die Flächen, die den Reifen luftdicht zur Felge hin abschließen, im radial und axial äußeren Bereich der Wulstzone, also im Reifeninnenraum. Damit ergeben sich aber gegenüber herkömmlichen Reifen erhebliche Herstellungsprobleme, weil es äußerst schwierig ist, an den genannten Stellen glatte Flächen bei der Konfektionierung und Vulkanisation des Reifens zu erzeugen.

In der DE-OS 32 46 624 wurde zur Lösung dieses Problems vorgeschlagen, den Reifenrohling in einer sogenannten Trapezstellung zu vulkanisieren, d.h. mit seitlich nach außen geschwenkten Reifenwülsten. Dieses Verfahren birgt jedoch den Nachteil in sich, daß bei dem Zurückschwenken der Reifenwülste in die Betriebsstellung des Reifens Spannungen in den Seitenwänden und Wülsten des Reifens auftreten können, die die ansonsten guten Eigenschaften des Reifens negativ beeinflussen können.

Der Erfindung liegt deshalb die Aufgabe zugrunde, ein Fertigungsverfahren für die genannten Fahrzeugluftreifen anzugeben, bei dem die Reifen in ihrer endgültigen Betriebsstellung, als konturgerecht vulkanisiert werden können.

Diese Aufgabe wird erfindungsgemäß dadurch gelöst, daß zunächst die Karkasse mit den benachbarten Kautschukschichten und die Reifenwülste mit zug-und druckfesten Wulstkernen auf einer Wickeltrommel zu einem im wesentlichen zylinderförmigen Rohling zusammengefügt werden, bei dem die Reifenwülste sich gegenüber dem mittleren Bereich des Rohlings nach radial innen erstrecken und die axial inneren Begrenzungsflächen der Reifenwülste mit der Zylinderwand des Rohlings im wesentlichen rechte Winkel einschließen, daß danach der Rohling zumindest im Bereich der Reifenwülste vorvulkanisiert wird, daß dann die Reifenwülste um etwa 180° um die Wulstkerne geschwenkt werden und der Rohling nach dem Einnehmen einer Toroidform mit dem Laufstreifen und gegenenfalls den Seitenwandstreifen versehen und im wesentlichen in der Betriebsstellung der Wülste fertigvulkanisiert wird.

Der wesentliche Vorteil der Erfindung besteht darin, daß durch das Vorformen des Reifenrohlings im Wulst-und unteren Seitenwandbereich und durch das Stabilisieren dieser Form mit Hilfe einer Vorvulkanisierung diese im Reifeninnenraum liegenden Bereiche bereits die endgültige Form mit einer glatten Oberfläche erhalten, so daß der Reifen in einer üblichen Vulkanisierform in seiner endgültigen Kontur fertigvulkanisiert werden kann. Das Vorvulkanisieren der Wulstbereiche kann sowohl auf der Wickeltrommel alsauch in einer andernorts befindlichen Vulkanisiervorrichtung durchgeführt werden. Nach dem Vorvulkanisieren der Reifenwülste werden diese um 180° um die Wulkstkerne geschwenkt, so daß die Vervollständigung des Reifenrohlings durch Hinzufügen von Laufstreifen und Seitenwandstreifen bei gleichzeitiger Erzeugung der endgültigen Reifenkontur erfolgen kann.

Vorteilhafte Ausgestaltungen der Erfindung sind den Unteransprüchen zu entnehmen. Nachfolgend wird ein Ausführungsbeispiel der Erfindung anhand einer Zeichnung näher erläutert. Es zeigt

Fig. 1 einen Reifenrohling, wie er auf einer Wickeltrommel konfektioniert wird, in einem radialen Teilschnitt,

Fig. 2 den Reifenrohling der Fig. 1 mit einer - schematisch angedeuteten Vulkanisiervorrichtung für die Reifenwülste in einem radialen Teilschnitt.

Fig. 3 einen vollständigen Reifenrohling in einer Vulkanisierform in einem radialen Teilschnitt,

Fig. 4 einen fertigen Reifen in seiner Betriebsstellung auf einer strichpunktiert angedeuteten Felge in einem radialen Teilschnitt,

Die Herstellung eines Reifens geschieht zunächst durch Konfektionierung eines Reifenrohlings auf einer Wickeltrommel, wobei der Reifenrohling aus der Reifenkarkasse 1, zug-und druckfesten Wukstkernen 2 und dem Kautschuk der Reifenwülste 3 besteht und zweckmäßigerweise bereits den Innenseelenkautschuk aufweist. Nachdem die Einzelteile des Rohlings auf der Wickeltrommel zusammengefügt sind, wird der mittlere Teil der Wickeltrommel geringfügig expandiert, so daß sich ein im wesentlichen zylinderförmiger Rohling ergibt, bei dem sich die Reifenwülste 3 gegenüber der Zylinderwand nach radial innen erstrecken. Es ist zweckmäßig, bereits auf der Wickeltrommel dem Reifenrohling im Bereich der Reifenwülste 3 die endgültige Form mit den späteren Sitzflächen 4 und den nahezu senkrechten axial inneren Begrenzungsflächen 5 zu geben. Diese Formgebung kann durch zusätzliche bekannte Anroller sowie andere Formmittel erzeugt werden.

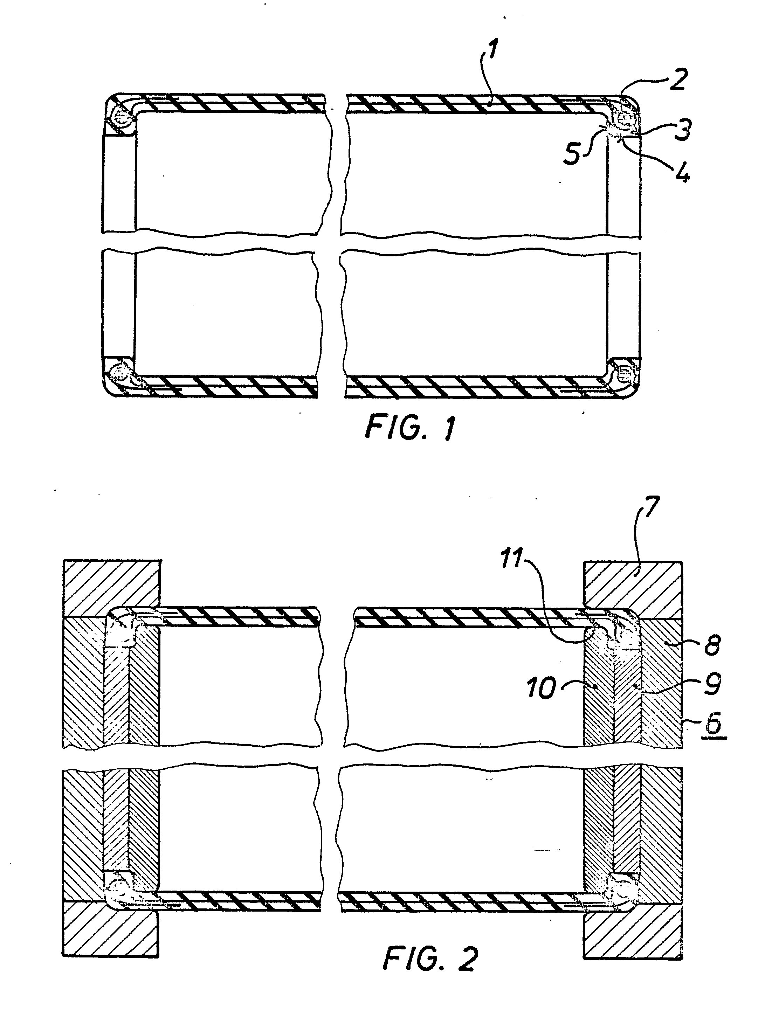

Nachdem der Reifenrohling in der im wesentlichen zylinderförmigen Form konfektioniert ist, wird er im Bereich der Reifenwülste 3 vorvulkanisiert, wie es in Fig. 2 durch je eine schematisch dargestellte Vulkanisiervorrichtung 6 mit Heizelementen 7, 8, 9, 10 für jeden Reifenwulst 3 angedeutet ist. Das Vorvulkanisieren des Reifenrohlings kann prinzipiell auf der Wickeltrommel oder aber an jedem anderen Ort erfolgen. Besonders günstig ist es, die Wikkeltrommel im Bereich der Reifenwülste 3 heizbar auszubilden. Das Vorvulkanisieren des Reifenrohlings hat hauptsächlich den Zweck dem Rohling im Bereich der Sitzflächen 4 der Begrenzungsflächen 5 und der benachbarten Teile 11 der Seitenwände bereits die endgültige Form mit einer äußerst glatten Oberfläche zu verleihen, so daß sich bei der weiteren Herstellung des Reifens die Form dieser Bereiche nicht mehr verändern kann. Es sollte angemerkt werden, daß die Reifenwülste 3 um die zug-und druckfesten Wulstkerne 2 - schwenkbar angeordnet sind. Dies kann durch bekannte Mittel, wie Gewebeeinlagen und Erzeugung von nichthaftenden Schichten erreicht werden.

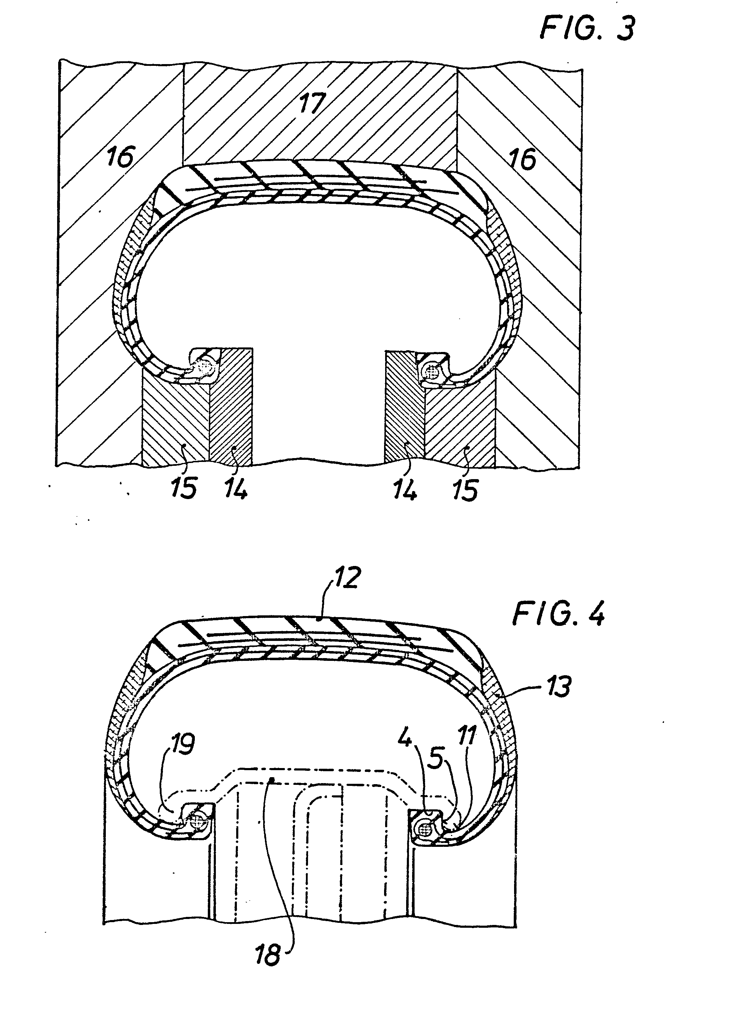

Nach dem Vorvulkanisieren der Reifenwülste 3 wird der zylinderförmige Reifenrohling auf übliche Weise in eine Toroidform gebracht, indem er in einen herangeführten Laufstreifen 12 hineinbombiert wird und gegebenenfalls die noch fehlenden Seitenwandstreifen 13 aufgelegt werden. Gleichzeitig werden die Reifenwülste 3 in der Weise um ca. 180° um die Wulstkerne 2 geschwenkt, daß sie in den Innenraum des Reifenrohlings und späteren Reifens hineinragen, so daß sich in bezug auf die Reifenwülste 3 die Sitzflächen 4 radial außen und die Begrenzungsflächen 5 axial außen befinden. Danaoh besitzt der Reifenrohling bereits die endgültige Kontur mit den vorgeformten Flächen 4, 5 und 11 im Reifeninnenraum, und er wird mit dieser Kontur, die der Betriebsstellung des fertigen Reifens entspricht, in einer üblichen Vulkanisierform fertigvulkanisiert. Die Vulkanisierform kann gemäß Fig 3 an sich bekannte Heizringe, bzw. -segmente 14, 15, 16 , 17 aufweisen.

Das Fertigvulkanisieren kann balglos oder aber auch unter Verwendung eines üblichen Heizbalgs erfolgen. Dabei ist es günstig, dem Heizbalg eine solche Form zu geben, mit der er den Innenraum seitlich neben den Reifenwülsten 7 ausfüllt. Dies kann durch Hinzufügen von Heizschläuchen geschehen. Es sind jedoch keine starren metallischen Formringe an diesen Stellen erforderlich.

Fig. 4 zeigt den fertigvulkanisierten Reifen auf einer strichpunktiert angedeuteten Felge 18. Der Reifen befindet sich im wesentlichen spannungsfrei auf der Felge 18, weil er mit der gleichen Querschnittsform fertigvulkanisiert worden ist. Auch wird ein luftdichter Sitz des Reifens auf der Felge 18 gewährleistet, weil den hierfür entscheidenden Flächen 4, 5, 11 bereits bei der Vorvulkanisation eine glatte Oberfläche verliehen worden ist und sie eine Kontur aufweisen, die der Kontur der Felge 18 im Bereich der Sitzflächen am Felgenkranz und am Felgenhorn 19 entspricht.

**Ansprüche**

1. Verfahren zur Herstellung eines Fahrzeugluftreifens, der mit seinen Wülsten am radial inneren Umfang einer Felge montierist und bei dem die Wülste relativ zu den Wulkstkernen verschwenkbar sind, dadurch gekennzeichnet, daß zunächst die Karkasse mit den benachbarten Kautschukschichten und die Reifenwülste mit zug-und druckfesten Wulstkernen auf einer Wickeltrommel zu einem im wesentlichen. zylinderförmigen Rohling zusammengefügt werden, bei dem die Reifenwülste sich gegenüber dem mittleren Bereich des Rohlings nach radial innen erstrecken und die axial inneren Begrenzungsflächen der Reifenwülste mit der Zylinderwand des Rohlings im wesentlichen rechte Winkel einschließen, daß danach der Rohling zumindest im Bereich der Reifenwülste vorvulkanisiert wird, daß dann die Reifenwülste um etwa 180° um die Wulstkerne geschwenkt werden und der Rohling nach dem Einnehmen einer Toroidform mit dem Laufstreifen und gegebenenfalls den Seitenwandstreifen versehen und im wesentlichen in der Betriebsstellung der Wülste fertigvulkanisiert wird.

2. Verfahren nach Anspruch 1, dadurch gekennzeichnet, daß die Reifenwülste bereits auf der Wickeltrommel vorvulkanisiert werden.

3. Verfahren nach Anspruch 1, dadurch gekennzeichnet, daß das Fertigvulkanisieren in einer Form mit Hilfe eines üblichen Heizbelags und zweier Heizschläuche durchgeführt wird.

4. Verfahren nach Anspruch 1, dadurch gekennzeichnet, daß das Fertigvulkanisieren in einer Form ohne Heizbalg durchgeführt wird.

5. Nach dem Verfahren gemäß Anspruch 1 hergestellter Fahrzeugluftreifen, gekennzeichnet durch eine im unteren Seitenwand-und Wulstbereich im wesentlichen waagerecht verlaufende Karkasse (1) und durch Reifenwülste (3), deren radial äußeren Flächen (Sitzflächen 4, Begrenzungsflächen 5) eine Kontur aufweisen, die im entspannten Zustand des Reifens bereits im wesentlichen der Kontur der Felgensitzfläche und der Felgenhornsitzfläche entspricht.

FIG. 1

FIG. 2

0 197 298

FIG. 3

FIG. 4